# EUROPEAN PATENT SPECIFICATION

(11) **EP 0 745 242 B1**
(45) Date of publication and mention of the grant of the patent: **20.11.2002**
(21) Application number: 95934807.9
(22) Date of filing: 09.11.1995
(51) Int. Cl.: G06F 15/16, G06F 13/00

(54) **VARIABLE DATA PROCESSOR ALLOCATION AND MEMORY SHARING**
VERÄNDERLICHE DATENPROZESSORZUWEISUNG UND GEMEINSAME SPEICHERBENUTZUNG
AFFECTATION VARIABLE DE PROCESSEURS DE DONNEES ET PARTAGE VARIABLE DE LA MEMOIRE

(30) Priority: 19.12.1994 EP 94203678
(43) Date of publication of application: 04.12.1996
(73) Proprietor: Koninklijke Philips Electronics N.V., 5621 BA Eindhoven (NL)
(72) Inventor: DE LANGE, Alphonsius, Anthonius, Jozef, NL-5621 BA Eindhoven (NL)
(74) Representative: Groenendaal, Antonius Wilhelmus Maria
(86) International application number: IB9500988
(87) International publication number: WO96019772

(56) References cited:
- US-A- 4 982 321
- US-A- 5 121 502
- US-A- 5 146 589

## Description

### FIELD OF THE INVENTION

The invention relates to a data processing system comprising a plurality of data port means (or I/O channels), each for enabling at least input of data or output of data, memory means for data storage, and data routing means between the plurality of data port means and the memory means. The data routing means includes first bus means for enabling selectively routing of the data to and from the memory means.

### BACKGROUND ART

One of the bottlenecks of high-speed data processing is the interface between separate data processing units, such as between memories and CPUs. This interface is an essential pathway in the entire processing system, as it is responsible for carrying an incessant flow of program instructions and data. Parallel processing increases speed on the one hand, but may introduce time-management problems on the other hand in regard to proper distribution of data, dependent on the specific data processing task.

A system that supports a parallel architecture as presented in the preamble is known from U.S. patent 5,103,311 (PHN 12,376). This reference discloses a processor system for processing video samples on a real-time basis in a modular and hierarchical architecture. The system has at least one processor unit that in turn has at least one module with a plurality of processing elements. The elements operate in parallel and are connected to a cross-bar switch for the appropriate routing of the input signals to the elements of the module and of the output signals from the elements. Each switch point of the cross-bar switch preferably is provided with a register to solve conflicts that may arise from simultaneous access requests to the same processor element. There is a fixed relationship between the sample frequency and the clock frequency at all levels in the system.

Another system of the type mentioned in the preamble is known from U.S. Patent 4,521,874 and concerns an interconnect cross-bar matrix with additional memory elements at interconnect nodes. Distribution of the memory elements facilitates the operation and programming of a parallel-processor structure. The storage protocol per element is based on consolidation, i.e, re-compaction of the stored data items in functionally contiguous memory locations after a particular data item has been purged from the memory upon reading. This data re-compaction requires additional circuitry. Also, the data re-compaction sets an upper limit to the operation speed, since it requires additional time between the execution of a last-read instruction and the execution of a next write instruction. Accordingly, this system is not suitable to process video signals on a real-time basis.

WO 93/01553 describes a microprocessor architecture with multiple processors. The processors are coupled to I/O devices via an I/O bus and to memory via a memory bus. The communication is via a switch network with a switch arbitration unit and a port arbitration unit prioritizing requests for data transfer. Both buses do not provide parallel connection paths. The use of arbitration can result in delays in accessing the memory.

### OBJECT OF THE INVENTION

Above examples of known systems either have a too rigid architecture to allow modifications or to efficiently allocate processing tasks, or have an architecture which cannot handle data on a real-time basis.

It is an object of the invention to provide a data processing architecture that enables deployment of the available memory capacity and processing power in a dynamic and highly flexible manner, especially for a multitude of data processing or signal processing tasks that are to be carried out in parallel on a real-time basis. It is a further object to provide such an architecture that is readily upgraded or modified.

### SUMMARY OF THE INVENTION

A data processing system according to the invention is set out in claim 1.

The invention therefore provides a data processing system as specified in the preamble of claim 1, the data routing means comprising second bus means coupled to the plurality of data port means for enabling routing the data to and from the data port means, and a further plurality of data processors interconnecting the first bus means and the second bus means and operative to process the data.

The system in the invention couples the plurality of data port means and the memory means via the processors and the first and second bus means. The term "processor" stands for a device equipped with data processing power, i.e., with some intelligence, thus going beyond mere data storage functionalities. The first and second bus means are interconnected via the processors. Depending on the types of apparatuses connected to the data port means, the processors may execute a variety of operations. For example, assume that the plurality of data port means is connected to a computer or data/graphics processor, a monitor, a TV tuner and a VCR. Then, the multitude of data processors have to execute, e.g., decoding and interpolation operations for the data supplied by the TV tuner and by the VCR, scan-related operations and motion correction for the data supplied to the monitor and graphics handling with regard to the computer data.

The invention is based on the insight that both memory capacity and parallel processing power can be used to the fullest extent and under a wide variety of liberal conditions by having the processors interconnecting the first and second buses. This architecture enables each processor to controllably serve each data port means as well as the entire memory means. The parallel data streams from or to the processors as well as the processing tasks to be executed can shift among the processors during operation to fully employ the processing capacity available in the processors combined. The modular character of this parallel architecture supports simple extension or modification of the system, e.g., to enable customizing on user-demand for a wide range of processing conditions. Also, adding an I/O channel or a memory unit, or changing the format of the data supplied to an I/O channel may simply require re-programming of one or more of the data processors.

The processors may each contain a different chip. In this way, a modular architecture is established by plugging-in the required processor chips for the tasks envisaged. E.g., among the plurality of processors there may be slow, medium and fast ones so that hardware costs can be optimized. Alternatively, two or more of the processors may be combined on a single chip. This integrated version has the advantage of occupying less space and fewer physical components than the former architecture. The processors may be all integrated on a single chip, together with the network composed of the first and second bus means, thus creating a generally applicable building block in the form of some sort of crossbar switch provided with processing power at the intersections. The processors, the first and second bus means and part or the whole of the memory means may also be integrated together.

The processors can operate or collaborate in several ways. A particular one or particular ones of the processors can be scheduled to execute the same task for several ones of the I/O channels (data port means). Alternatively, a particular one of the processors can be scheduled to execute different tasks for the same I/O channel. Alternatively, a particular one of the processors may be scheduled to execute different tasks for several ones of the I/O channels.

The invention is especially, but not exclusively, relevant to customized and modular multi-media systems to achieve a functional integration of processing hardware for a blending of, e.g., full-motion video, computer generated graphics and sound.

### DESCRIPTION OF THE DRAWING

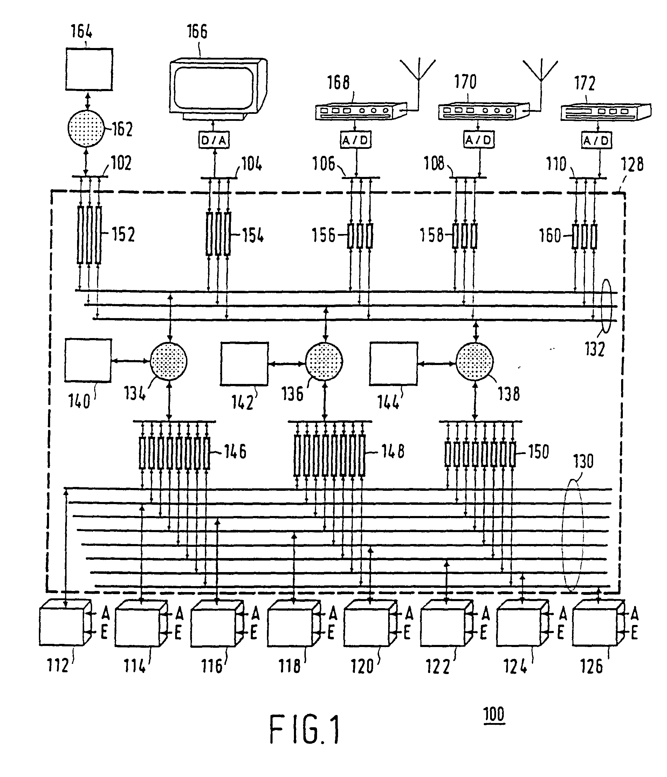

The invention is explained in further detail and by way of example with reference to the accompanying drawing. Figures 1 to 8 of the drawing give a block diagrams of embodiments of a system according to the invention. Throughout the drawing, same reference numerals indicate similar or corresponding features.

### DETAILED EMBODIMENTS

### First embodiment

Figure 1 is a block diagram of a first example of a system 100 according to the invention to carry out multiple processing tasks in parallel. System 100 comprises a plurality of data port means or I/O channels 102, 104, 106, 108 and 110, each for enabling at least input of data or output of data. For example, data port 102 is a high-speed channel, data port 104 is a medium speed channel and data ports 106-110 are low-speed channels. System 100 also includes a plurality of memories 112, 114, 116, 118, 120, 122, 124 and 126, that in this example are shown as DRAMs serving as a display memory. System 100 is further provided with data routing means 128 between data port means 102-110 and memories 112-126. Data routing means includes first bi-directional bus means 130 for enabling selectively routing of the data to and from memories 112-126, second bi-directional bus means 132 coupled to data port means 102-110 for enabling selectively routing the data to and from data port means 102-110, and a further plurality of data processors 134, 136 and 138 operative to process the incoming and outgoing data while interconnecting first bus means 130 and second bus means 132. Processors 134-138 may each be provided with a physically individual program-and-data memory 140, 142 and 144, respectively, for processing control. Alternatively, processors 134-138 may be controlled through a single program-and-data memory that functionally performs the control tasks for each individual one of processors 134-138.

Data routing means 128 includes a plurality of groups 146, 148 and 150 of first I/O buffers or data caches between data processors 134, 136 and 138, respectively, and individual ones of bus lines of first bus means 130. The first I/O buffers have access control and tri-state outputs, thus permitting the sorting, clustering or distributing the data in advance, prior to storage in arbitrarily selected ones of memories 112-126 or prior to being processed in the relevant one of processors 134-138. Similarly, data routing means 128 includes a further plurality of groups 152, 154, 156, 158 and 160 of second I/O buffers or data caches between data ports 102, 104, 106, 108 and 110, respectively, and individual bus lines of second bus means 132. The second I/O buffers have access control and tri-state outputs. The second I/O buffers of groups 152-160 permit sorting, clustering or distributing the data prior to routing the data to arbitrarily selected ones of processors 134-138 or to arbitrarily selected ones of data ports 102-110.

In the example shown, data port means 102-110 are coupled to a plurality of apparatuses as follows. Data port means 102 is coupled to a computer data/graphics processor 162 having a program and data memory 164. Data port means 104 is coupled to a display monitor 166. Data port means 106 and 108 are coupled to a first TV tuner 168 and a second TV tuner 170, respectively. Data port means 110 is coupled to a VCR 172.

Due to the location of processors 134-138 between the first and second bus means 130 and 132, respectively, each individual one of processors 134-138 is capable of controllably serving each of data port means 102-110 as well as each of memories 122-126 via bus means 130 and 132. Thus, an effective sharing of processing power is achieved. For example, each of processors 134-138 may be scheduled to contribute to the filtering, decoding and interpolation operations on the data supplied by apparatuses 168-170, to the progressive scan motion correction operations on the data supplied to apparatus 166, etc. Each of processors 134-138 may be scheduled to contribute to image transforming operations or filtering operations on data that constitute a compound image to be displayed on monitor 166 and that are furnished by one or more among memories 112-126.

The modular character of the architecture renders the data routing in system 100 highly versatile and suitable for a large variety of parallel data processing tasks. For example, in addition to the sharing of processing power, processors 134-138 are enabled to exchange data among themselves via bus means 130 and 132, e.g., for the execution of iterative operations. Further, the architecture enables several processing steps to be executed on the same data. Data can be stored as intermediate results in memories 112-126 or in program/data memories 140-144 for off-line computations before these data are supplied to another one of processors 134-138. Also, the modular architecture supports simple extension or modification of system 100. E.g., adding an I/O channel or changing the format of the data supplied to an I/O channel may simply require re-programming of one or more of data processors 134-138.

As not all data streams from and to data port means 102-110 and memories 112-126 need to be processed at equally high speeds, processors 134-138 need not be processing at a uniform speed or they even need not be uniform. For example, processor 134 may be a medium-speed signal processor, processor 136 may be a high-speed signal processor and processor 138 may be a low-speed signal processor. Such an architecture saves money as high-speed processors are more expensive than low-speed ones, and power consumption. Allocation of the processing tasks among processors 134-138 then preferably is optimized, e.g., for efficiency or cost. Alternatively, processors 134-138 may be all high-speed signal processors so as to be prepared for a scenario wherein, e.g., the system requires all data ports 102-110 concurrently supplying or requesting data at high-speed.

### Second embodiment

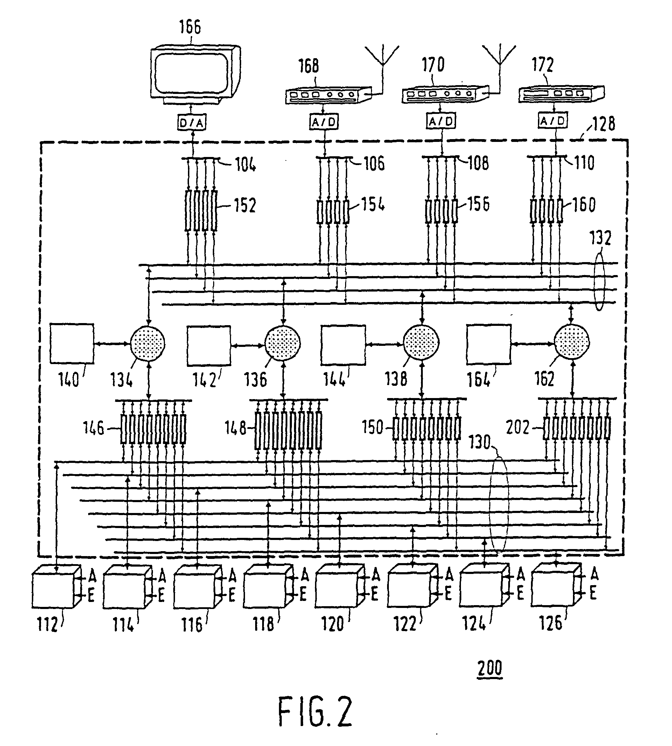

Figure 2 is a block diagram of a second example of a system 200 according to the invention. System 200 differs from system 100 mainly in that computer data/graphics processor 162 and its memory 164 are relocated. Since the data provided by processor 162 may not need being processed twice, processor 162 can be functionally located at the same level as processors 134-138 so as to play its own part in the sharing of processing power discussed above. Processor 162 is coupled to first bus means 130 via a further group of first I/O buffers 202, similarly as explained above with reference to processors 134-138. Processor 162 can be used to extract data, e.g., teletext data, from one or more of the video signals delivered by tuners 168 and 170. Processor 162 can also process these extracted data, generate a graphics representation and write the graphics representation to the display memory formed by memories 112-126 combined.

### Third embodiment

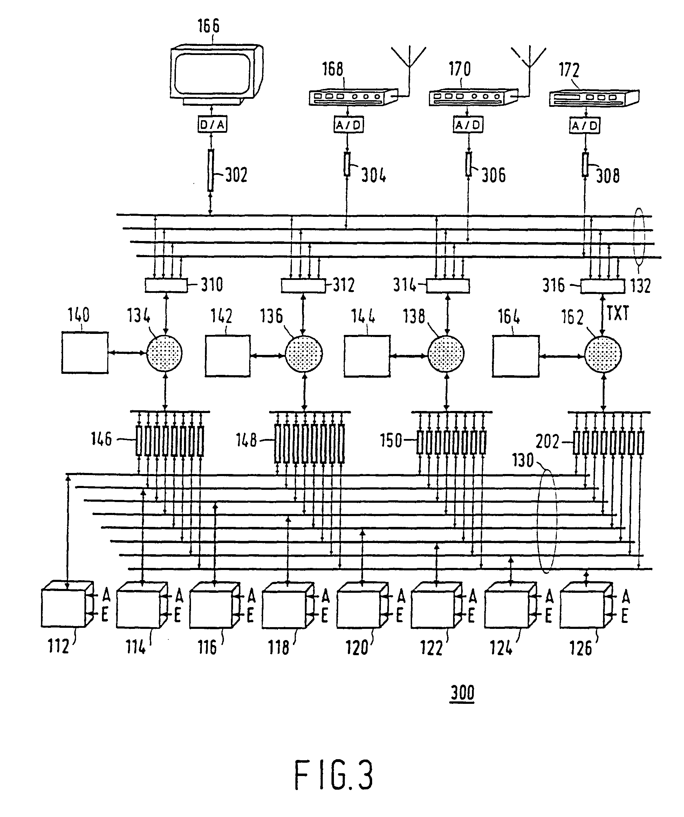

Figure 3 is a block diagram of a third example of a system 300 according to the invention. System 300 differs from system 200 mainly in that the configuration of the system with regard to second I/O buffers 152-160 of Figure 2 is modified. Second I/O buffers 152-160 enable the system to sort in advance the data supplied by apparatuses 168-172 to data ports 104-110 in a random access pattern. It may be no longer required to sort the supplied data on the basis of random access, as the data passing through processors 134-160 need not be sorted in advance according to destination, i.e., a selected one of memories 112-126. Therefore, the groups of access controllable second I/O buffers 152-160 are replaced by single caches 302, 304, 306 and 308 and multiplexers 310, 312, 314 and 316. Note that sorting is mandatory for data traffic between processors 134-138 and 162 and memories 112-126 of the display memory. The architecture of system 300 reduces the number of separate I/O buffers without affecting the aggregate buffer capacity.

### Fourth embodiment

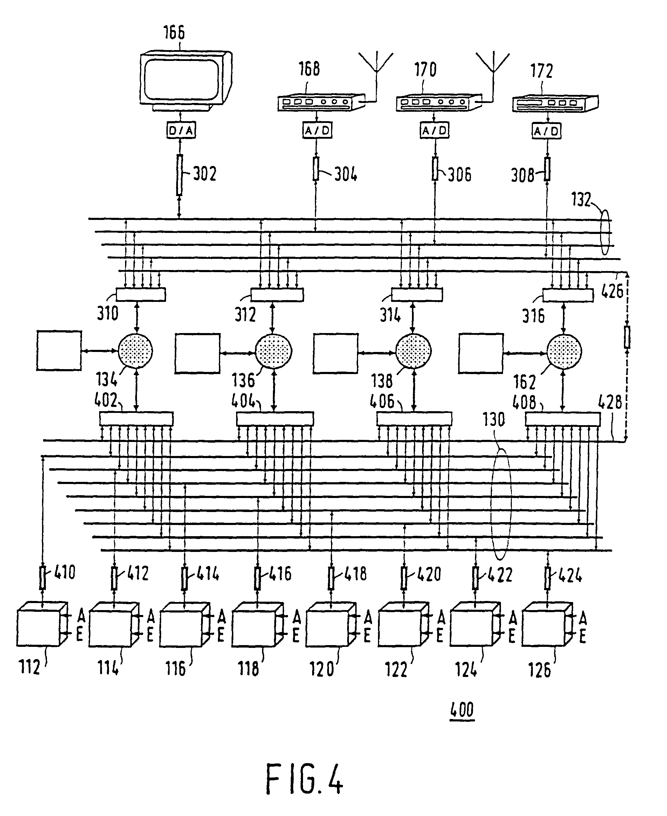

Figure 4 is a block diagram of a fourth example of a system 400 according to the invention. A major difference between system 400 and system 300 of Figure 3 is the absence of access controllable first I/O buffers 146, 148, 150 and 202, which interconnect processors 134-138 and 162 to first bus means 130. Access controllable first I/O buffers 146-150 and 202 are replaced by multiplexers 402, 404, 406 and 408 and single caches 410, 412, 414, 416, 418, 420, 422 and 424. The sorting on memory number now has to be accomplished by processors 134-138 and 162. In addition, the sharing of bus means 130 and 132 by processors 134-138 and 162 requires accurate processor synchronization as each data transfer involving said processors uses the commonly owned bus means 130 and 132.

Optionally, system 400 may be provided with additional bus lines 426 and 428, connected between multiplexers 310-316 and 402-408, e.g., to permit feedback among processors 134-138 and 162.

### Fifth embodiment

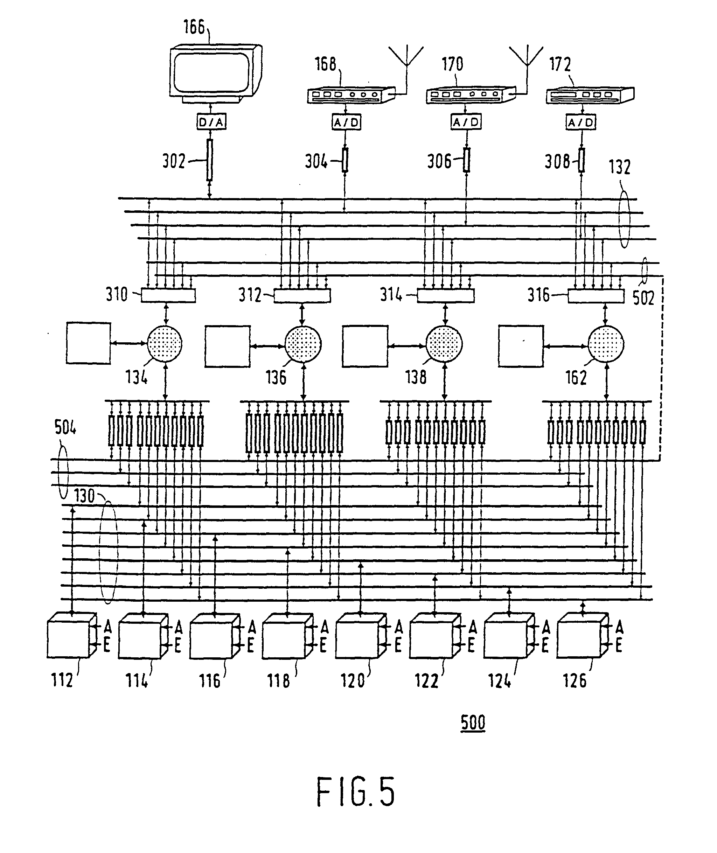

Similarly, the other systems referred to in this text, e.g., systems 100, 200 and 300, may be provided with such a feedback path, mutatis mutandis. Figure 5 is a block diagram of a fifth example of a system 500 according to the invention. A major difference between system 300 and system 500 is the addition of inter-processor busses 502 and 504 to enable concurrent inter-processor communication among processors 134-138 and 162 without interfering with the data traffic over first and second bus means 130 and 132.

### Sixth embodiment

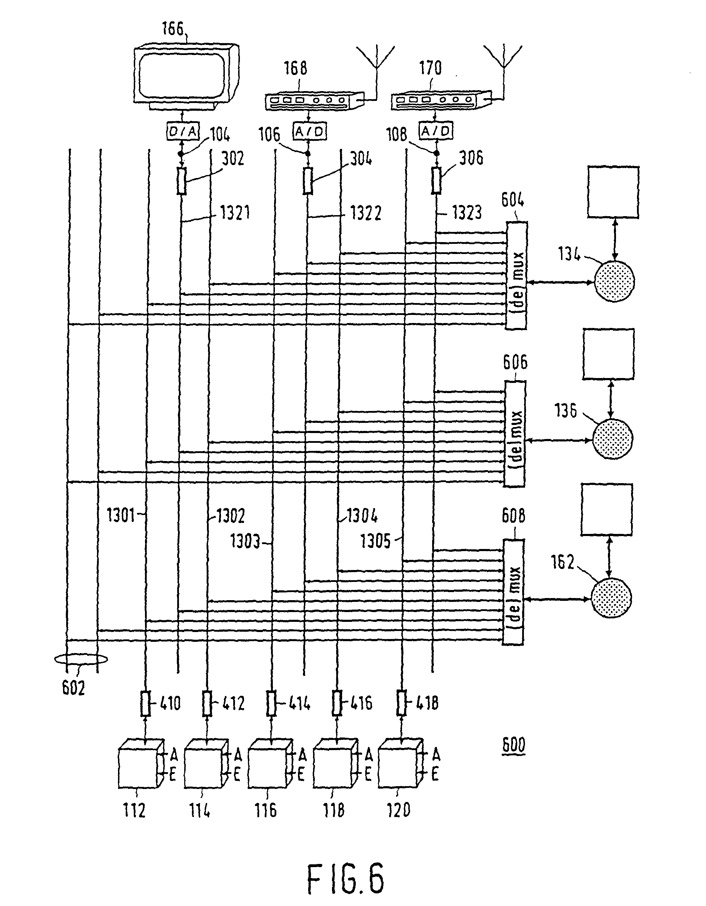

Figure 6 is a block diagram of a sixth example of a system 600 according to the invention. A major difference between the architecture of system 400 and that of system 600 resides in processors 134, 136 and 162 now having bi-directional ports or input/output ports that can share a single data input/output channel. The bus structures of system 400 now can be merged to decrease the number of separate first and second I/O buffers. All bus means, including first bus means 1301, 1302, 1303, 1304 and 1305, second bus means 1321, 1322 and 1323 and inter-processor bus means 602 now are connected to processors 134, 136 and 162 through commonly shared multiplexers 604, 606 and 608.

### Seventh embodiment

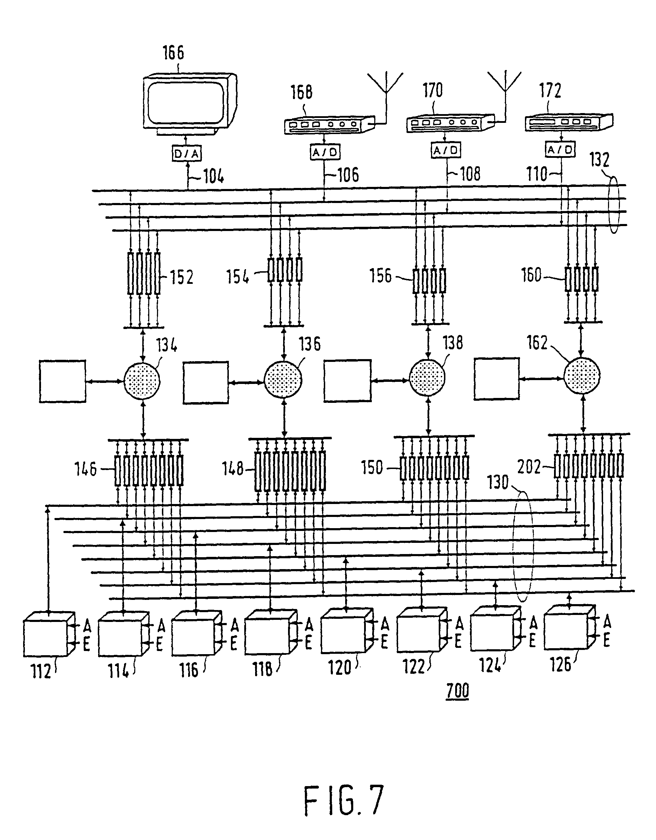

Figure 7 is a block diagram of a seventh example of a system 700 in accordance with the invention. With regard to system 200, second I/O buffers 152, 154, 156 and 160 now are shifted through second bus means 132 towards processors 134-138 and 162. This has the advantage that first and second bus means 130 and 132 now have obtained similar lay-outs thus reducing architectural complexity. System 700 also can be provided with inter-processor bus means 502 and 504 (not shown here) similar to system 500.

### Eighth embodiment

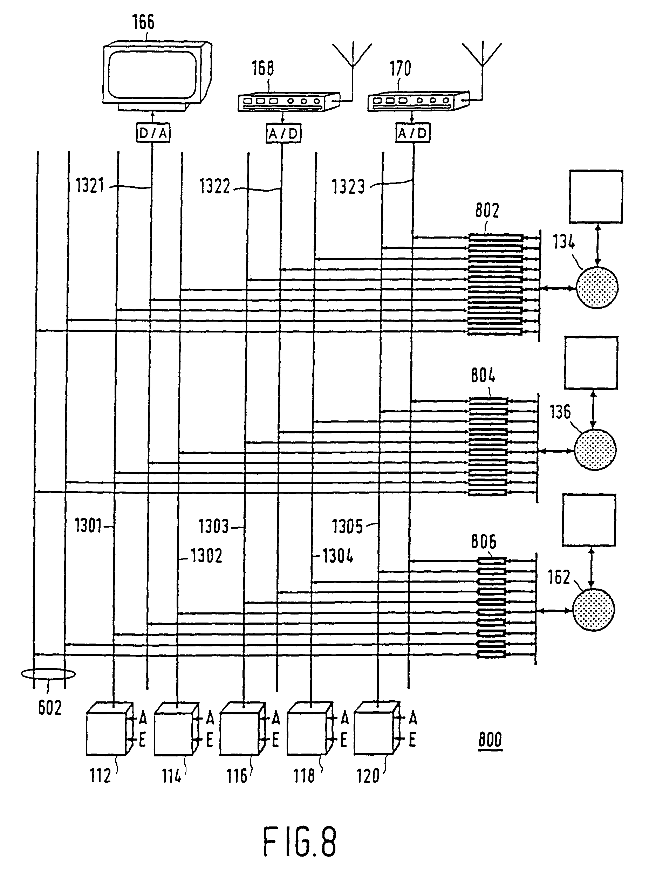

Figure 8 is a block diagram of an eighth example of a system 800 in accordance with the invention. The symmetry of first and second bus means 130 and 132 in system 700 can be exploited when processors 134-138 and 162 are fast enough to read and write data via a single bus line (one, two or more bits wide) and if processors 134-138 and 162 have bi-directional ports. Note that two uni-directional ports can be combined into a single bi-directional port. In this case, first and second bus means 130 and 132 can be merged into a single bus structure in system 800.

All data are communicated via buffers (data caches) 802, 804 and 606: the communication between processors 134, 136 and 162 via inter-processor bus means 602, the communication between processors 134, 136 and 162 and I/O apparatuses 166, 168 and 170 via second bus means 1321-1323, and the communication between processors 134, 136 and 162 and memories 112, 114, 116 118 and 120 via first bus means 1301-1305. This buffer-determined communication has the advantage that processors 134, 136 and 162 need synchronization at a high level only, thus decreasing synchronization overhead and increasing processor-performance efficiency.

Furthermore, the design of software for the processors 134, 136 and 162 in system 800 can be simplified. The granularity of the level of inter-processor synchronization can be modified dependent on the size of buffers 802-806. A global processor (not shown) or a local bus arbiter (not shown) can decide which part of the bandwidth of bus means 1301-1305, 1321-1323 and 602 is to be assigned to which communication procedure. It is clear that this controller can be implemented by a program running on one or more of the processors shown or on a separate processor.

In order to fully appreciate the invention, the following items may be considered for a general system according to the invention.

A particular one or each of memories 112-126 may itself be composed of several memory banks. On the other hand, the memory means may be composed of a single memory bank so that first bus mean 130 effectively has one bus line.

Further, a hierarchical architecture with greater depth can be envisaged. E.g., a third layer (and further layers) of bus means may be connected to the first or second bus means 130 or 132 through a further layer of processors, e.g., in order to hierarchically distribute processing power among several levels.

The examples discussed above show memories 112-126 coupled to first bus means 130. Some or all of memories 112-126 may be replaced by other data handling devices, possibly provided with a register, such as further processors (intelligent devices), for other particular tasks than the ones discussed with reference to Figures 1-8.

## Claims

1. A data processing system comprising:
- a plurality of data port means (102, 104, 106, 108), each for enabling at least input of data or output of data;
- memory means (112, .., 124) for storage of the data; and
- data routing means (128) between the plurality of data port means and the memory means and including:
- a plurality of data processors (134, .., 138);
- first bus means (130) coupled to the plurality of data processors and the memory means for enabling selectively routing of the data to and from the memory means;
- a second bus means (132) coupled to the plurality of data port means and the plurality of data processors for enabling selectively routing the data to and from the data port means;
the plurality of data processors interconnecting the first bus means and the second bus means and operative to process the data;
**characterised in that** the first bus means includes a plurality of parallel, independently operated bus lines, each of the respective bus lines enabling routing of data between one of the data processors and the memory means, and **in that** the second bus means includes a plurality of parallel, independently operated bus lines, each of the respective bus lines enabling routing of data between one of the data port means and one of the data processors.

2. The system of Claim 1, wherein the plurality of data processors comprises a first processor and a second processor, the first and second processors being operative to process the data at mutually substantially different first and a second rates, respectively.

3. The system of Claim 1, wherein the data routing means comprises at least one of the following:
- respective first buffer means between a respective one of the data processors and the memory means; or
- respective second buffer means between the respective one of the data processors and the plurality of the data port means.

4. The system of Claim 1, wherein the data routing means comprises at least one of the following:
- a respective first multiplexer means between a respective one of the data processors and the memory means; or
- a respective second multiplexer means between the respective one of the data processors and the plurality of data port means.

5. \ The system of Claim 1, wherein a particular one of the data processors includes a computer data/graphics processor.

6. The system of Claim 1 or 5, wherein the data routing means comprises an inter-processor bus means operative to enable data communication between the data processors.

7. The system of Claim 1 or 5, wherein the data routing means comprises:
- respective first buffer means between a respective one of the data processors and the first bus means; and
- respective second buffer means between the respective one of the data processors and the second bus means.

## Patentansprüche

1. Datenverarbeitungssystem mit:
- einer Vielzahl von Datenportmitteln (102, 104, 106, 108), die jeweils zumindest die Eingabe oder Ausgabe von Daten ermöglichen;
- Speichermittel (112, ..., 124) zur Speicherung der Daten; und
- Datenlenkungsmittel (128) zwischen der Vielzahl von Datenportmitteln und den Speichermitteln und mit:
- einer Vielzahl von Datenprozessoren (134, ..., 138);
- ersten Busmitteln (130), die mit der Vielzahl von Datenprozessoren und den Speichermitteln gekoppelt sind, um eine selektive Lenkung der Daten zu und von den Speichermitteln zu ermöglichen;
- zweiten Busmittel (132), die mit der Vielzahl von Datenportmitteln und der Vielzahl von Datenprozessoren gekoppelt sind, um eine selektive Lenkung der Daten zu und von den Datenportmitteln zu ermöglichen;
wobei die Vielzahl der Datenprozessoren die ersten Busmittel und die zweiten Busmittel miteinander verbinden und die Daten verarbeiten;
**dadurch gekennzeichnet, dass** die ersten Busmittel eine Vielzahl paralleler, unabhängig voneinander arbeitender Busleitungen umfassen, wobei jede der betreffenden Busleitungen die Lenkung von Daten zwischen einem der Datenprozessoren und den Speichermitteln ermöglicht, und dass die zweiten Busmittel eine Vielzahl paralleler, unabhängig voneinander arbeitender Busleitungen umfassen, wobei jede der betreffenden Busleitungen die Lenkung von Daten zwischen einem der Datenportmitteln und einem der Datenprozessoren ermöglicht.

2. System nach Anspruch 1, wobei die Vielzahl der Datenprozessoren einen ersten Prozessor und einen zweiten Prozessor umfasst, und der erste und der zweite Prozessor dazu dienen, die Daten mit wechselseitig im Wesentlichen unterschiedlichen ersten bzw. zweiten Geschwindigkeiten zu verarbeiten.

3. System nach Anspruch 1, wobei die Datenlenkungsmittel mindestens eines von Folgendem umfassen:
- entsprechende erste Puffermittel zwischen einem der Datenprozessoren und den Speichermitteln; oder
- entsprechende zweite Puffermittel zwischen einem der Datenprozessoren und der Vielzahl von Datenportmitteln.

4. System nach Anspruch 1, wobei die Datenlenkungsmittel mindestens eines von Folgendem umfassen:
- entsprechende erste Multiplexermittel zwischen einem der Datenprozessoren und den Speichermitteln; oder
- entsprechende zweite Multiplexermittel zwischen einem der Datenprozessoren und der Vielzahl von Datenportmitteln.

5. System nach Anspruch 1, wobei ein bestimmter der Datenprozessoren einen Computer-Daten/Grafik-Prozessor beinhaltet.

6. System nach Anspruch 1 oder 5, wobei die Datenlenkungsmittel ein Busmittel zwischen den Prozessoren umfassen, um die Datenkommunikation zwischen den Datenprozessoren zu ermöglichen.

7. System nach Anspruch 1 oder 5, wobei die Datenlenkungsmittel Folgendes umfassen:
- entsprechende erste Puffermittel zwischen einem der Datenprozessoren und den ersten Busmitteln; und
- entsprechende zweite Puffermittel zwischen einem der Datenprozessoren und den zweiten Busmitteln.

## Revendications

1. Système de traitement de données, comprenant :
- une pluralité de moyens de ports de données (102, 104, 106,108), chacun destiné à permettre au moins l'entrée de données ou la sortie de données;
- des moyens de mémoire (112,..., 124) pour stocker les données, et
- un moyen de routage de données (128) entre la pluralité de moyens de ports de données et les moyens de mémoire et comprenant :
- une pluralité de processeurs de données (134,..., 138);
- un premier moyen de bus (130) connecté à la pluralité de processeurs de données et aux moyens de mémoire pour permettre un routage sélectif des données vers et depuis le moyen de mémoire;
- un deuxième moyen de bus (132) connecté à la pluralité de moyens de ports de données et à la pluralité de processeurs de données pour permettre le
routage sélectif des données vers et depuis le moyen de port de données ; la pluralité des processeurs de données interconnectant le premier moyen de bus et le deuxième moyen de bus et fonctionnant pour traiter les données;
**caractérisé en ce que** le premier moyen de bus comprend une pluralité de lignes de bus parallèles fonctionnant indépendamment, chacune des lignes de bus respectives permettant le routage de données entre l'un des processeurs de données et le moyen de mémoire, et **en ce que** le deuxième moyen de bus comprend une pluralité de lignes de bus parallèles fonctionnant indépendamment, chacune des lignes de bus respectives permettant le routage de données entre l'un des moyens de ports de données et l'un des processeurs de données.

2. Système suivant la revendication 1, dans lequel la pluralité de processeurs de données comprend un premier processeur et un deuxième processeur, les premier et deuxième processeurs étant susceptibles de traiter les données à des première et deuxième vitesses mutuellement notablement différentes, respectivement.

3. Système suivant la revendication 1, dans lequel le moyen de routage de données comprend au moins un des éléments suivants :
- un premier moyen de tampon respectif entre un processeur respectif parmi les processeurs de données et le moyen de mémoire, ou
- un deuxième moyen de tampon respectif entre les processeur respectif parmi les processeurs de données et la pluralité des moyens de port de données.

4. Système suivant la revendication 1, dans lequel le moyen de routage de données comporte au moins un des éléments suivants :
- un premier moyen multiplexeur respectif entre un processeur respectif parmi les processeurs de données et le moyen de mémoire, ou
- un deuxième moyen multiplexeur respectif entre le processeur respectif parmi les processeurs de données et la pluralité de moyens de ports de données.

5. Système suivant la revendication 1, dans lequel un processeur particulier parmi les processeurs de données comprend un processeur de données/graphiques informatiques.

6. Système suivant la revendication 1 ou 5, dans lequel le moyen de routage de données comprend un moyen de bus interprocesseur susceptible de permettre une communication de données entre les processeurs de données.

7. Système suivant la revendication 1 ou 5, dans lequel le moyen de routage de données comprend :
- un premier moyen de tampon respectif entre un processeur respectif parmi les processeurs de données et le premier moyen de bus, et
- un deuxième moyen de tampon respectif entre le processeur respectif parmi les processeurs de données et le deuxième moyen de bus.
